# EUROPEAN PATENT APPLICATION

(11) **EP 4 583 554 A1**
(43) Date of publication of application: **09.07.2025**
(21) Application number: 23870538.8
(22) Date of filing: 20.09.2023
(51) Int. Cl.: H04W 8/22

(54) **CAPABILITY INDICATION METHOD AND APPARATUS, AND TERMINAL AND MEDIUM**

(30) Priority: 26.09.2022 CN 202211177484
(71) Applicant: Vivo Mobile Communication Co., Ltd., Dongguan, Guangdong 523863 (CN)
(72) Inventor: WU, Kai, Dongguan, Guangdong 523863 (CN); WANG, Yong, Dongguan, Guangdong 523863 (CN); CAI, Jiansheng, Dongguan, Guangdong 523863 (CN)
(74) Representative: Murgitroyd & Company
(86) International application number: PCT/CN2023/120143
(87) International publication number: WO 2024/067306

(57) **Abstract**

This application discloses a capability indication method and apparatus, a terminal, and a medium, and pertains to the field of communication technologies. The capability indication method in an embodiment of this application includes: transmitting, by a terminal, random access information on a random access resource. A target capability of the terminal is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions.

## Description

This application claims priority to Chinese Patent Application No. 202211177484.8, filed with the China National Intellectual Property Administration on September 26, 2022 and entitled "CAPABILITY INDICATION METHOD AND APPARATUS, TERMINAL, AND MEDIUM", which is incorporated herein by reference in its entirety.

### TECHNICAL FIELD

This application pertains to the field of communication technologies, and specifically relates to a capability indication method and apparatus, a terminal, and a medium.

### BACKGROUND

Currently, in a new radio (New Radio, NR) system, if a network-side device does not configure a dedicated physical uplink control channel (Physical Uplink Control Channel, PUCCH) resource for a terminal, the terminal may transmit data to the network-side device with a common (common) PUCCH resource for communication with the network-side device.

However, since the network-side device may not be able to determine a capability of the terminal to support a transmission function (such as a capability to support PUCCH repetition, a capability to support inter-slot frequency hopping, and a capability to support frequency hopping between two adjacent repetitions), the network-side device may be unable to configure the transmission function for the terminal. As a result, the data transmission with the common (common) PUCCH resource between the terminal and the network-side device may fail.

Consequently, communication performance is degraded.

### SUMMARY

Embodiments of this application provide a capability indication method and apparatus, a terminal, and a medium, to solve communication performance degradation.

A first aspect provides a capability indication method, applied to a terminal. The method includes: transmitting, by a terminal, random access information on a random access resource. A target capability of the terminal is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions.

A second aspect provides a capability indication apparatus. The capability indication apparatus includes a transmission module. The transmission module is configured to transmit random access information on a random access resource. A target capability of the terminal is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions.

A third aspect provides a terminal. The terminal includes a processor and a memory. The memory stores a program or instructions capable of running on the processor. When the program or instructions are executed by the processor, the steps of the method according to the first aspect are implemented.

A fourth aspect provides a terminal, including a processor and a communication interface. The communication interface is configured to transmit random access information on a random access resource. A target capability of the terminal is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions.

A fifth aspect provides a capability indication system, including a terminal and a network-side device. The terminal may be configured to execute the steps of the method according to the first aspect.

A sixth aspect provides a readable storage medium. The readable storage medium stores a program or instructions. When the program or instructions are executed by a processor, the steps of the method according to the first aspect are implemented.

A seventh aspect provides a chip. The chip includes a processor and a communication interface. The communication interface is coupled to the processor, and the processor is configured to run a program or instructions, to implement the steps of the method according to the first aspect.

An eighth aspect provides a computer program/program product. The computer program/program product is stored in a storage medium. The computer program/program product is executed by at least one processor, to implement the steps of the method according to the first aspect.

In the embodiments of this application, the terminal may transmit the random access information on the random access resource, and the target capability of the terminal is at least indicated by at least one of the random access resource and the random access information, so that the network-side device can determine the target capability, where the target capability includes at least one of the capability to support PUCCH repetition, the capability to support inter-slot frequency hopping, and the capability to support frequency hopping between two adjacent repetitions. The terminal may at least indicate the target capability of the terminal to the network-side device with at least one of the random access resource and the random access information, so that the situation that the network-side device is unable to configure a transmission function for the terminal (that is, PUCCH repetition, inter-slot frequency hopping, and frequency hopping between two adjacent repetitions) can be avoided. This prevents failure in data transmission with the common PUCCH resource between the terminal and the network-side device, thereby improving communication performance.

### BRIEF DESCRIPTION OF DRAWINGS

FIG. 1 is a block diagram of a wireless communication system according to an embodiment of this application;
FIG. 2 is a schematic flowchart of a capability indication method according to an embodiment of this application;
FIG. 3 is a schematic structural diagram of a capability indication apparatus according to an embodiment of this application;
FIG. 4 is a schematic structural diagram of a communication device according to an embodiment of this application; and
FIG. 5 is a schematic diagram of a hardware structure of a terminal according to an embodiment of this application.

### DETAILED DESCRIPTION OF EMBODIMENTS

The following clearly describes technical solutions in embodiments of this application with reference to the accompanying drawings in the embodiments of this application. It is clear that the described embodiments are only some rather than all embodiments of this application. All other embodiments obtained by persons of ordinary skill in the art based on the embodiments of this application shall fall within the protection scope of this application.

The following describes terms used in the embodiments of this application.

### 1. PUCCH resource

In an NR system, a terminal may feedback uplink control information (Uplink Control Information, UCI) to a network-side device via a PUCCH. A PUCCH resource is configured by the network-side device.

Typically, PUCCH resources are classified into common PUCCH resources and dedicated PUCCH resources.

The common PUCCH resource is a PUCCH resource used before configuration of a dedicated PUCCH resource by the network-side device. The common PUCCH resource is a configured PUCCH resource shared by a plurality of users or a common PUCCH resource configured for each serving cell; and a PUCCH on the common PUCCH resource may be referred to as a common PUCCH.

A dedicated PUCCH resource is a PUCCH resource dedicatedly configured by the network-side device for a terminal after a radio resource control (Radio Resource Control, RRC) connection is established between the terminal and the network-side device.

### 2. Reduced capability (Reduced capability, Redcap) terminal

Currently, a new terminal type, namely, Redcap terminal, is proposed in standards of the 3rd generation partnership project (3rd Generation Partnership Project, 3GPP). Typically, the Redcap terminal meets the following requirements: low costs, low complexity, a certain degree of coverage enhancement, and power saving.

Usually, a Redcap terminal may have single receiving antenna or two receiving antennas.

### 3. Other terms

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" usually indicates an "or" relationship between associated objects.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably. The technology described herein may be used in the foregoing systems and radio technologies, and may be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

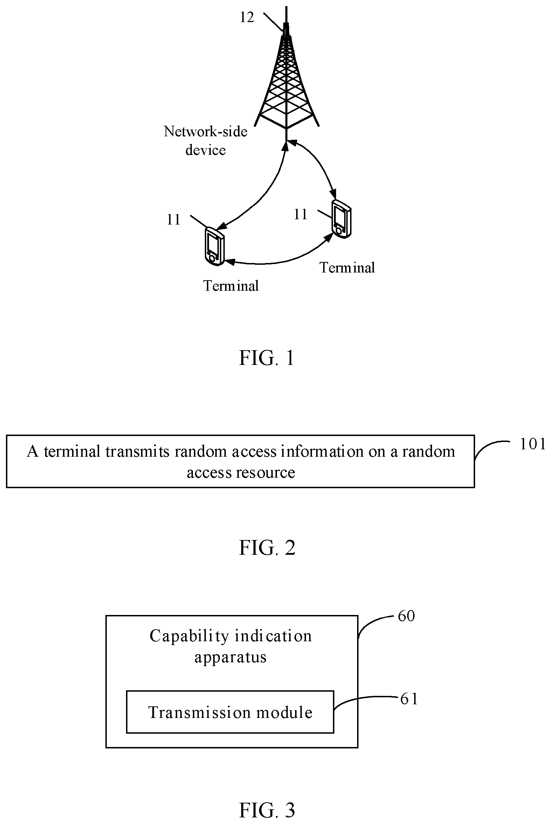

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or core network device, where the access network device 12 may also be referred to as a radio access network device, radio access network (Radio Access Network, RAN), radio access network function, or radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example for description, and a specific type of the base station is not limited.

Currently, if the network-side device does not configure a dedicated PUCCH resource for the terminal, the terminal can only use a common PUCCH resource. However, in some scenarios (such as a non-terrestrial network (Non-Terrestrial Network, NTN)), using a PUCCH on which transmission is performed with a common PUCCH resource (for example, used for Msg 4 hybrid automatic repeat request (Hybrid Automatic Repeat reQuest, HARQ)) leads to substandard receiving performance, resulting in failure in random access. Consequently, all channels for services (such as voice over new radio (Voice over NewRadio, VoNR) and low-speed data transmission) cannot be used for transmission, leading to the failure in the data transmission with the common PUCCH resource between the terminal and the network-side device. In the related technology, to address the above issue, the network-side device can configure a transmission function for the terminal (such as PUCCH repetition, inter-slot frequency hopping, and frequency hopping between two adjacent repetitions), to prevent the situation that all channels for services cannot be used for transmission. However, since the network-side device may not be able to determine a capability of the terminal to support a transmission function (such as a capability to support PUCCH repetition, a capability to support inter-slot frequency hopping, and a capability to support frequency hopping between two adjacent repetitions), the network-side device may be unable to configure the transmission function for the terminal. As a result, the data transmission with the common PUCCH resource between the terminal and the network-side device may still fail.

However, in this embodiment of this application, the terminal may transmit random access information on a random access resource, and the capability of the terminal to support a transmission function is at least indicated by at least one of the random access resource and the random access information. Therefore, the network-side device can determine the capability to support a transmission function. This can avoid the situation that the network-side device may be unable to configure the foregoing transmission function for the terminal. In this way, the failure in the data transmission with the common PUCCH resource between the terminal and the network-side device can be avoided.

The following describes in detail a capability indication method and apparatus, a terminal, and a medium provided in embodiments of this application through some embodiments and application scenarios thereof with reference to accompanying drawings.

FIG. 2 is a flowchart of a capability indication method according to an embodiment of this application. As shown in FIG. 2, the capability indication method provided in this embodiment of this application may include the following step 101.

Step 101: A terminal transmits random access information on a random access resource.

In this embodiment of this application, a target capability of the terminal is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions.

Optionally, in this embodiment of this application, when no radio resource control (Radio Resource Control, RRC) connection is established between the terminal and the network-side device, or when no dedicated PUCCH resource is configured for the terminal by the network-side device, the terminal may transmit random access information on the random access resource, to indicate the target capability to the network-side device.

Optionally, in this embodiment of this application, the target capability is a capability of the terminal to perform transmission with a common PUCCH resource; and the target capability may be one set of capabilities or a plurality of sets of capabilities.

Optionally, in this embodiment of this application, the target capability is provided as a plurality of sets of target capabilities, where each set of the target capabilities are capabilities corresponding to one type of user equipment (User Equipment, UE) for the terminal.

Herein, one type of UE may be any of the following: RedCap UE or non-RedCap UE.

Each set of target capabilities may specifically be capabilities of one type of UE for the terminal to use a common PUCCH resource for transmission.

It can be understood that capabilities of different types of UE to use a common PUCCH resource for PUCCH repetition, inter-slot frequency hopping, and frequency hopping between two adjacent repetitions can be reported independently.

The capability to support PUCCH repetition may be a capability to perform PUCCH repetition with a common PUCCH resource. The capability to support PUCCH repetition may indicate support of PUCCH repetition with a common PUCCH resource or nonsupport of PUCCH repetition with a common PUCCH resource.

Herein, the PUCCH repetition may be PUCCH repetition for feedback of Msg 4 HARQ or another PUCCH repetition performed in a case that the terminal cannot access a dedicated PUCCH resource. The PUCCH repetition may be inter-slot (inter-slot) repetition, intra-slot (intra-slot) repetition, or cross-slot repetition.

Herein, a PUCCH format (format) for transmission in the PUCCH repetition may be at least one of the following: a PUCCH format 1 and a PUCCH format 0. Certainly, the PUCCH format may alternatively be another PUCCH format. This is not limited in this embodiment of this application.

Optionally, in this embodiment of this application, in a case that the target capability includes the capability to support PUCCH repetition, the target capability includes at least one of the following:
a capability to support dynamic PUCCH repetition;
a capability to support semi-static PUCCH repetition;
a capability to support intra-slot PUCCH repetition;
a capability to support inter-slot PUCCH repetition;
a capability to support single-TRP PUCCH repetition;
a capability to support multi-TRP PUCCH repetition;
a capability to support PUCCH repetition based on a PUCCH format;
a capability to support PUCCH repetition based on a PUCCH resource;
a capability to support PUCCH repetition based on an available time unit; and
a capability to support PUCCH repetition based on a physical time unit.

For example, it is assumed that the target capability is two sets of capabilities, such as capability 1 and capability 2. The capability 1 may include the capability to support dynamic PUCCH repetition, and the capability 2 may include the capability to support semi-static PUCCH repetition. It can be understood that the capability to support dynamic PUCCH repetition and the capability to support semi-static PUCCH repetition may be two independent capabilities.

For another example, the target capability is one set of capabilities, for example, capability 1. The capability 1 may include the capability to support dynamic PUCCH repetition and the capability to support semi-static PUCCH repetition. It can be understood that the capability to support dynamic PUCCH repetition and the capability to support semi-static PUCCH repetition may alternatively be one capability.

The capability to support inter-slot frequency hopping (inter-slot frequency hopping) maybe a capability to support inter-slot frequency hopping with a common PUCCH resource. The capability to support inter-slot frequency hopping may indicate support of inter-slot frequency hopping with a common PUCCH resource or nonsupport of inter-slot frequency hopping with a common PUCCH resource.

The capability to support frequency hopping between two adjacent repetitions (frequency hopping between two adjacent repetitions) may be a capability to support frequency hopping between two adjacent repetitions with a common PUCCH resource. The capability to support frequency hopping between two adjacent repetitions may indicate support of frequency hopping between two adjacent repetitions with a common PUCCH resource or nonsupport of frequency hopping between two adjacent repetitions with a common PUCCH resource.

The time unit may specifically be any of the following: a system frame, a slot, a mini-slot, or the like.

Optionally, in this embodiment of this application, the random access resource may be a common PUCCH resource.

Optionally, in this embodiment of this application, the random access resource includes at least one of the following:
a PRACH resource;
an Msg A physical uplink shared channel (Physical Uplink Shared Channel, PUSCH) resource;
an Msg A resource; and
an Msg 3 PUSCH resource.

The PRACH resource includes at least one of the following:
a PRACH time domain resource;
a PRACH frequency domain resource;
a PRACH sequence;
a scrambling sequence of a PRACH sequence;
a PRACH format; and
a first PRACH resource.

For example, it is assumed that the target capability includes the capability to support PUCCH repetition, and the PRACH resource includes the PRACH time domain resource. If the terminal supports PUCCH repetition with a common PUCCH resource, the terminal may transmit the random access information on a PRACH time domain resource 1, to indicate to the network-side device that the terminal supports PUCCH repetition with a common PUCCH resource; or if the terminal does not support PUCCH repetition with a common PUCCH resource, the terminal may transmit the random access information on a PRACH time domain resource 2, to indicate to the network-side device that the terminal does not support PUCCH repetition with a common PUCCH resource.

It should be noted that for explanation regarding indication of the target capability with another resource in the PRACH resource (that is, a PRACH frequency domain resource, and/or a PRACH sequence, and/or a scrambling sequence of a PRACH sequence, and/or a PRACH format), reference can be made to the detailed descriptions of indicating the target capability with the PRACH time domain resource. In this embodiment of this application, details are not described herein.

Herein, the first PRACH resource indicates whether the terminal performs PRACH repetition.

For example, it is assumed that the target capability includes the capability to support PUCCH repetition. If the terminal performs PRACH repetition, it may be considered that the terminal supports PUCCH repetition with a common PUCCH resource.

It should be noted that for explanation regarding indication of another capability with a PRACH resource (for example, the capability to support inter-slot frequency hopping and/or the capability to support frequency hopping between two adjacent repetitions), reference can be made to the detailed descriptions of indicating the capability to support PUCCH repetition with a PRACH resource. In this embodiment of this application, details are not described herein.

The Msg A PUSCH resource includes at least one of the following:
an Msg A PUSCH time domain resource;
an Msg A PUSCH frequency domain resource;
an Msg A PUSCH demodulation reference signal (Demodulation Reference Signal, DMRS) resource;
an Msg A PUSCH group; and
a first Msg A PUSCH resource.

It can be understood that the target capability may be implicitly indicated by the Msg A PUSCH resource.

For example, it is assumed that the target capability includes the capability to support PUCCH repetition, and the Msg A PUSCH resource includes the Msg A PUSCH group. During 2-step random access (2-step Random Access, 2-step RACH), if the terminal supports PUCCH repetition with a common PUCCH resource, the terminal may transmit the random access information on an Msg A PUSCH group A, to indicate to the network-side device that the terminal supports PUCCH repetition with a common PUCCH resource; or if the terminal does not support PUCCH repetition with a common PUCCH resource, the terminal may transmit the random access information on an Msg A PUSCH group B, to indicate to the network-side device that the terminal does not support PUCCH repetition with a common PUCCH resource.

It should be noted that for explanation regarding indication of the target capability with another resource in the Msg A PUSCH resource (that is, an Msg A PUSCH frequency domain resource, and/or an Msg A PUSCH DMRS resource, and/or an Msg A PUSCH group), reference can be made to the detailed descriptions of indicating the target capability with the Msg A PUSCH time domain resource. In this embodiment of this application, details are not described herein.

Herein, the first Msg A PUSCH resource indicates whether the terminal performs Msg A PUSCH repetition.

It should be noted that for explanation regarding indication of another capability with the Msg A PUSCH resource (that is, the capability to support inter-slot frequency hopping and/or the capability to support frequency hopping between two adjacent repetitions), reference can be made to the detailed descriptions of indicating the capability to support PUCCH repetition with an Msg A PUSCH resource. In this embodiment of this application, details are not described herein.

The Msg A resource includes at least one of the following:
an Msg A time domain resource;
an Msg A frequency domain resource; and
an Msg A DMRS resource.

For example, it is assumed that the target capability includes the capability to support PUCCH repetition, and the Msg A resource includes the Msg A time domain resource. During 2-step RACH, if the terminal supports PUCCH repetition with a common PUCCH resource, the terminal may transmit the random access information on an Msg A time domain resource 1, to indicate to the network-side device that the terminal supports PUCCH repetition with a common PUCCH resource; or if the terminal does not support PUCCH repetition with a common PUCCH resource, the terminal may transmit the random access information on an Msg A time domain resource 2, to indicate to the network-side device that the terminal does not support PUCCH repetition with a common PUCCH resource.

It should be noted that for explanation regarding indication of another capability with the Msg A resource (that is, the capability to support inter-slot frequency hopping and/or the capability to support frequency hopping between two adjacent repetitions), reference can be made to the detailed descriptions of indicating the capability to support PUCCH repetition with an Msg A resource. In this embodiment of this application, details are not described herein.

The Msg 3 PUSCH resource includes at least one of the following:
an Msg 3 PUSCH time domain resource;
an Msg 3 PUSCH frequency domain resource;
an Msg 3 PUSCH DMRS resource;
an Msg 3 PUSCH payload (payload) size; and
a first Msg 3 PUSCH resource.

For example, it is assumed that the target capability includes the capability to support PUCCH repetition, and the Msg 3 PUSCH resource includes the Msg 3 PUSCH time domain resource. During 4-step random access (4-step Random Access, 4-step RACH), if the terminal supports PUCCH repetition with a common PUCCH resource, the terminal may transmit the random access information on an Msg 3 PUSCH time domain resource 1, to indicate to the network-side device that the terminal supports PUCCH repetition with a common PUCCH resource; or if the terminal does not support PUCCH repetition with a common PUCCH resource, the terminal may transmit the random access information on an Msg 3 PUSCH time domain resource 2, to indicate to the network-side device that the terminal does not support PUCCH repetition with a common PUCCH resource.

Herein, the first Msg 3 PUSCH resource indicates whether the terminal supports Msg 3 PUSCH repetition.

It should be noted that for explanation regarding indication of another capability with the Msg 3 PUSCH resource (that is, the capability to support inter-slot frequency hopping and/or the capability to support frequency hopping between two adjacent repetitions), reference can be made to the detailed descriptions of indicating the capability to support PUCCH repetition with an Msg 3 PUSCH resource. In this embodiment of this application, details are not described herein.

Optionally, in this embodiment of this application, the random access information includes at least one of the following:
information carried by an Msg A PUSCH; and
information carried by an Msg 3 PUSCH.

It can be understood that the target capability may be explicitly indicated by the information carried by the Msg A PUSCH, and/or explicitly indicated by the information carried by the Msg 3 PUSCH.

In the capability indication method provided in this embodiment of this application, the terminal may transmit the random access information on the random access resource, and the target capability of the terminal is at least indicated by at least one of the random access resource and the random access information, so that the network-side device can determine the target capability, where the target capability includes at least one of the capability to support PUCCH repetition, the capability to support inter-slot frequency hopping, and the capability to support frequency hopping between two adjacent repetitions. The terminal may at least indicate the target capability of the terminal to the network-side device with at least one of the random access resource and the random access information, so that the situation that the network-side device is unable to configure a transmission function for the terminal (that is, PUCCH repetition, inter-slot frequency hopping, and frequency hopping between two adjacent repetitions) can be avoided. This prevents failure in data transmission with the common PUCCH resource between the terminal and the network-side device, thereby improving communication performance.

Further, because the terminal can indicate the target capability of the terminal to the network-side device with at least one of the random access resource and the random access information, the reliability of the PUCCH repetition on the common PUCCH resource is improved, ensuring a success rate for HARQ feedback before establishment of the RRC connection.

Certainly, in a case that the target capability is provided as a plurality of sets of capabilities, each set of capabilities may include different capabilities. Each set of capabilities may be indicated by a combination of a different PRACH resource, and/or Msg A PUSCH resource, and/or Msg A resource, and/or Msg 3 PUSCH resource. Examples are given below for description.

Optionally, in this embodiment of this application, the target capability is provided as a plurality of sets of target capabilities, the random access resource is provided in plurality, and the random access information is provided in plurality, where each set of the target capabilities are at least indicated by at least one of the following: at least one of the random access resources and at least one piece of the random access information.

For example, it is assumed that the target capability includes the capability to support intra-slot PUCCH repetition and the capability to support inter-slot PUCCH repetition, and the random access resource includes a PRACH sequence. In this case, four preamble (preamble) groups may be defined on each PRACH occasion (occasion). As shown in Table 1, if the terminal only supports intra-slot PUCCH repetition and does not support inter-slot PUCCH repetition, the terminal may transmit the random access information on a PRACH in group A, to indicate to the network-side device that the terminal only supports intra-slot PUCCH repetition and does not support inter-slot PUCCH repetition; if the terminal only supports inter-slot PUCCH repetition and does not support intra-slot PUCCH repetition, the terminal may transmit the random access information on a PRACH in group B, to indicate to the network-side device that the terminal only supports inter-slot PUCCH repetition and does not support intra-slot PUCCH repetition; if the terminal supports inter-slot PUCCH repetition and intra-slot PUCCH repetition, the terminal may transmit the random access information on a PRACH in group C, to indicate to the network-side device that the terminal supports inter-slot PUCCH repetition and intra-slot PUCCH repetition; and if the terminal does not support inter-slot PUCCH repetition and intra-slot PUCCH repetition, the terminal may transmit the random access information on a PRACH in group D, to indicate to the network-side device that the terminal does not support inter-slot PUCCH repetition and intra-slot PUCCH repetition.

**Table 1**

| Preamble group | Intra-slot PUCCH repetition | Inter-slot PUCCH repetition |
|---|---|---|
| A | Yes | No |
| B | No | Yes |
| C | Yes | Yes |
| D | No | No |

Certainly, the terminal may also indicate the capability of the terminal to support PUCCH repetition to the network-side device, so that the network-side device can determine, based on the capability to support PUCCH repetition, the capability of the terminal to support inter-slot frequency hopping and/or the capability to support frequency hopping between two adjacent repetitions. Examples are given below for description.

Optionally, in this embodiment of this application, in a case that the target capability is the capability to support PUCCH repetition, a first capability of the terminal is represented by the target capability. The first capability includes at least one of the following: the capability to support inter-slot frequency hopping and the capability to support frequency hopping between two adjacent repetitions. In a case that the capability to support PUCCH repetition indicates support of PUCCH repetition, the network-side device can determine that the terminal supports inter-slot frequency hopping and/or frequency hopping between two adjacent repetitions.

In a case that the capability to support PUCCH repetition indicates nonsupport of PUCCH repetition, the network-side device can determine that the terminal does not support inter-slot frequency hopping and/or frequency hopping between two adjacent repetitions.

It can be learned that since the terminal can report only the representation of the capability to support PUCCH repetition to the network-side device, the network-side device can determine at least one of the capability of the terminal to support inter-slot frequency hopping and the capability to support frequency hopping between two adjacent repetitions, and therefore resources for reporting the capability of the terminal can be saved.

Certainly, the network-side device may determine that the capability of the terminal to support inter-slot frequency hopping and the capability to support frequency hopping between two adjacent repetitions are mandatory (mandatory). Examples are given below for description.

Optionally, in this embodiment of this application, in a case that the target capability is the capability to support PUCCH repetition, the capability of the terminal to support inter-slot frequency hopping indicates support of inter-slot frequency hopping, and the capability of the terminal to support frequency hopping between two adjacent repetitions indicates support of frequency hopping between two adjacent repetitions.

It can be understood that the network-side device may determine by default that the terminal supports inter-slot frequency hopping and/or frequency hopping between two adjacent repetitions.

In this way, it can be learned that resources for reporting the capability of the terminal can be saved because the network-side device by default determines that the terminal supports inter-slot frequency hopping and/or frequency hopping between two adjacent repetitions and the terminal does not need to report.

The capability indication method provided in this embodiment of this application may be executed by a capability indication apparatus. The capability indication apparatus provided in an embodiment of this application is described by using an example in which the capability indication method is executed by the capability indication apparatus provided in this embodiment of this application.

FIG. 3 is a possible schematic structural diagram of a capability indication apparatus included in an embodiment of this application. As shown in FIG. 3, the capability indication apparatus 60 may include a transmission module 61.

The transmission module 61 is configured to transmit random access information on a random access resource. A target capability of the capability indication apparatus 60 is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions.

In a possible implementation, the random access resource includes at least one of the following: a PRACH resource; an Msg A PUSCH resource; an Msg A resource; and an Msg 3 PUSCH resource.

In a possible implementation, the PRACH resource includes at least one of the following: a PRACH time domain resource; a PRACH frequency domain resource; a PRACH sequence; a scrambling sequence of a PRACH sequence; a PRACH format; and a first PRACH resource. The first PRACH resource indicates whether the capability indication apparatus 60 performs PRACH repetition.

In a possible implementation, the Msg A PUSCH resource includes at least one of the following: an Msg A PUSCH time domain resource; an Msg A PUSCH frequency domain resource; an Msg A PUSCH DMRS resource; an Msg A PUSCH group; and a first Msg A PUSCH resource. The first Msg A PUSCH resource indicates whether the capability indication apparatus 60 performs Msg A PUSCH repetition.

In a possible implementation, the Msg A resource includes at least one of the following: an Msg A time domain resource; an Msg A frequency domain resource; and an Msg A DMRS resource.

In a possible implementation, the Msg 3 PUSCH resource includes at least one of the following: an Msg 3 PUSCH time domain resource; an Msg 3 PUSCH frequency domain resource; an Msg 3 PUSCH DMRS resource; an Msg 3 PUSCH payload size; and a first Msg 3 PUSCH resource. The first Msg 3 PUSCH resource indicates whether the capability indication apparatus 60 performs Msg 3 PUSCH repetition.

In a possible implementation, the random access information includes at least one of the following: information carried by an Msg A PUSCH; and information carried by an Msg 3 PUSCH.

In a possible implementation, in a case that the target capability includes the capability to support PUCCH repetition, the target capability includes at least one of the following: a capability to support dynamic PUCCH repetition; a capability to support semi-static PUCCH repetition; a capability to support intra-slot PUCCH repetition; a capability to support inter-slot PUCCH repetition; a capability to support single-TRP PUCCH repetition; a capability to support multi-TRP PUCCH repetition; a capability to support PUCCH repetition based on a PUCCH format; a capability to support PUCCH repetition based on a PUCCH resource; a capability to support PUCCH repetition based on an available time unit; and a capability to support PUCCH repetition based on a physical time unit.

In a possible implementation, in a case that the target capability is the capability to support PUCCH repetition, a first capability of the capability indication apparatus 60 is represented by the target capability. The first capability includes at least one of the following: the capability to support inter-slot frequency hopping and the capability to support frequency hopping between two adjacent repetitions.

In a possible implementation, in a case that the target capability is the capability to support PUCCH repetition, the capability of the capability indication apparatus 60 to support inter-slot frequency hopping indicates support of inter-slot frequency hopping, and the capability of the capability indication apparatus 60 to support frequency hopping between two adjacent repetitions indicates support of frequency hopping between two adjacent repetitions.

In a possible implementation, the target capability is provided as a plurality of sets of target capabilities, where each set of the target capabilities are capabilities corresponding to one type of UE for the capability indication apparatus 60.

In a possible implementation, the target capability is provided as a plurality of sets of target capabilities, the random access resource is provided in plurality, and the random access information is provided in plurality. Each set of the target capabilities are at least indicated by at least one of the following: at least one of the random access resources and at least one piece of the random access information.

In a possible implementation, the target capability is a capability of the capability indication apparatus 60 to perform transmission with a common PUCCH resource.

For the capability indication apparatus provided in this embodiment of this application, the capability indication apparatus may at least indicate the target capability of the capability indication apparatus to the network-side device with at least one of the random access resource and the random access information, so that the situation that the network-side device is unable to configure a transmission function for the capability indication apparatus (that is, PUCCH repetition, inter-slot frequency hopping, and frequency hopping between two adjacent repetitions) can be avoided. This prevents failure in data transmission with the common PUCCH resource between the capability indication apparatus and the network-side device, thereby improving communication performance.

The capability indication apparatus in this embodiment of this application may be an electronic device such as an electronic device with an operating system, or a component in an electronic device such as an integrated circuit or chip. The electronic device may be a terminal or another device other than the terminal. For example, the terminal may include but is not limited to the types of the terminal 11 listed above, and the another device may be a server, a network attached storage (Network Attached Storage, NAS), or the like. This is not specifically limited in this embodiment of this application.

The capability indication apparatus provided in this embodiment of this application can implement the processes implemented in the method embodiment of FIG. 2, with the same technical effects achieved. To avoid repetition, details are not described herein.

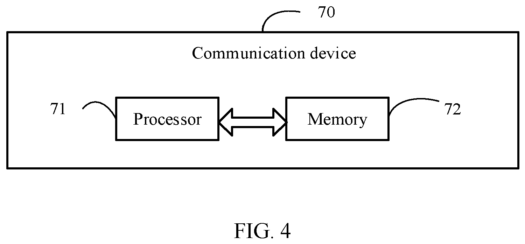

Optionally, in this embodiment of this application, as shown in FIG. 4, an embodiment of this application further provides a communication device 70 including a processor 71 and a memory 72. The memory 72 stores a program or instructions capable of running on the processor 71. For example, in a case that the communication device 70 is a terminal. When the program or the instructions are executed by the processor 71, the steps of the capability indication method embodiment are implemented, with the same technical effects achieved. To avoid repetition, details are not described herein.

An embodiment of this application further provides a terminal, including a processor and a communication interface. The communication interface is configured to transmit random access information on a random access resource. A target capability of the terminal is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions. This terminal embodiment corresponds to the foregoing method embodiment on the terminal side. All processes and implementations in the foregoing method embodiment are applicable to this terminal embodiment, with the same technical effects achieved. Specifically, FIG. 5 is a schematic diagram of a hardware structure of a terminal implementing the embodiments of this application.

The terminal 100 includes but is not limited to at least part of these components: a radio frequency unit 101, a network module 102, an audio output unit 103, an input unit 104, a sensor 105, a display unit 106, a user input unit 107, an interface unit 108, a memory 109, and a processor 110.

Persons skilled in the art can understand that the terminal 100 may further include a power supply (such as a battery) for supplying power to the components. The power supply may be logically connected to the processor 110 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or combine some components, or have different component arrangements. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, and the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a function button (such as a volume control button or an on/off button), a trackball, a mouse, and a joystick. Details are not described herein.

In this embodiment of this application, the radio frequency unit 101 receives downlink data from a network-side device and sends the data to the processor 110 for processing; and the radio frequency unit 101 can send uplink data to the network-side device. Generally, the radio frequency unit 101 includes but is not limited to an antenna, an amplifier, a transceiver, a coupler, a low noise amplifier, and a duplexer.

The memory 109 may be configured to store software programs or instructions and various data. The memory 109 may include a first storage area for storing a program or instructions and a second storage area for storing data. The first storage area may store an operating system, an application program or instructions required by at least one function (for example, sound play function or image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 109 in this embodiment of this application includes but is not be limited to these memories and any other applicable types of memories.

The processor 110 may include one or more processing units. Optionally, the processor 110 may integrate an application processor and a modem processor. The application processor mainly processes operations related to an operating system, user interface, application program, and the like. The modem processor, for example, a baseband processor, mainly processes radio communication signals. It can be understood that the modem processor may alternatively be not integrated in the processor 110.

The radio frequency unit 101 is configured to transmit random access information on a random access resource.

The target capability of the terminal is at least indicated by at least one of the following: the random access resource and the random access information. The target capability includes at least one of the following: a capability to support PUCCH repetition, a capability to support inter-slot frequency hopping, and a capability to support frequency hopping between two adjacent repetitions.

For the terminal provided in this embodiment of this application, the terminal may at least indicate the target capability of the terminal to the network-side device with at least one of the random access resource and the random access information, so that the situation that the network-side device is unable to configure a transmission function for the terminal (that is, PUCCH repetition, inter-slot frequency hopping, and frequency hopping between two adjacent repetitions) can be avoided. This prevents failure in data transmission with the common PUCCH resource between the terminal and the network-side device, thereby improving communication performance.

An embodiment of this application further provides a readable storage medium, where the readable storage medium stores a program or instructions. When the program or the instructions are executed by a processor, the processes of the foregoing capability indication method embodiment are implemented, with the same technical effects achieved. To avoid repetition, details are not described herein.

The processor is a processor in the terminal in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor, and the processor is configured to run a program or instructions, so that the processes in the foregoing capability indication method embodiment are implemented, with the same technical effects achieved. To avoid repetition, details are not described herein.

It should be understood that the chip mentioned in this embodiment of this application may also be referred to as a system-on-chip, an SoC, a system-on-a-chip, or a system on a chip, or the like.

An embodiment of this application further provides a computer program/program product. The computer program/program product is stored in a storage medium, and the computer program/program product is executed by at least one processor, to implement the processes of the foregoing capability indication method embodiment, with the same technical effects achieved. To avoid repetition, details are not described herein.

An embodiment of this application further provides a capability indication system, including a terminal and a network-side device. The terminal may be configured to execute the steps of the foregoing capability indication method.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the embodiments of this application is not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

According to the description of the foregoing implementations, persons skilled in the art can clearly understand that the method in the foregoing embodiment may be implemented by software in combination with a necessary general hardware platform. Certainly, the method in the foregoing embodiment may alternatively be implemented by hardware. However, in many cases, the former is a preferred implementation. Based on such an understanding, the technical solutions of the present invention essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from essence of this application and the protection scope of the claims, and all such forms fall within the protection scope of this application.

## Claims

1. A capability indication method, comprising:
transmitting, by a terminal, random access information on a random access resource, wherein
a target capability of the terminal is at least indicated by at least one of the following: the random access resource and the random access information; and
the target capability comprises at least one of the following: a capability to support physical uplink control channel PUCCH repetition, a capability to support inter-slot frequency hopping, and a capability to support frequency hopping between two adjacent repetitions.

2. The method according to claim 1, wherein the random access resource comprises at least one of the following:
a physical random access channel PRACH resource;
a message Msg A physical uplink shared channel PUSCH resource;
an Msg A resource; and
an Msg 3 PUSCH resource.

3. The method according to claim 2, wherein the PRACH resource comprises at least one of the following:
a PRACH time domain resource;
a PRACH frequency domain resource;
a PRACH sequence;
a scrambling sequence of a PRACH sequence;
a PRACH format; and
a first PRACH resource; wherein
the first PRACH resource indicates whether the terminal performs PRACH repetition.

4. The method according to claim 2, wherein the Msg A PUSCH resource comprises at least one of the following:
an Msg A PUSCH time domain resource;
an Msg A PUSCH frequency domain resource;
an Msg A PUSCH demodulation reference signal DMRS resource;
an Msg A PUSCH group; and
a first Msg A PUSCH resource; wherein
the first Msg A PUSCH resource indicates whether the terminal performs Msg A PUSCH repetition.

5. The method according to claim 2, wherein the Msg A resource comprises at least one of the following:
an Msg A time domain resource;
an Msg A frequency domain resource; and
an Msg A DMRS resource.

6. The method according to claim 2, wherein the Msg 3 PUSCH resource comprises at least one of the following:
an Msg 3 PUSCH time domain resource;
an Msg 3 PUSCH frequency domain resource;
an Msg 3 PUSCH DMRS resource;
an Msg 3 PUSCH payload (payload) size; and
a first Msg 3 PUSCH resource; wherein
the first Msg 3 PUSCH resource indicates whether the terminal performs Msg 3 PUSCH repetition.

7. The method according to claim 1, wherein the random access information comprises at least one of the following:
information carried by an Msg A PUSCH; and
information carried by an Msg 3 PUSCH.

8. The method according to claim 1, wherein in a case that the target capability comprises the capability to support PUCCH repetition, the target capability comprises at least one of the following:
a capability to support dynamic PUCCH repetition;
a capability to support semi-static PUCCH repetition;
a capability to support intra-slot PUCCH repetition;
a capability to support inter-slot PUCCH repetition;
a capability to support single transmission and reception point single-TRP PUCCH repetition;
a capability to support multi-TRP PUCCH repetition;
a capability to support PUCCH repetition based on a PUCCH format;
a capability to support PUCCH repetition based on a PUCCH resource;
a capability to support PUCCH repetition based on an available time unit; and
a capability to support PUCCH repetition based on a physical time unit.

9. The method according to claim 1, wherein in a case that the target capability is the capability to support PUCCH repetition, a first capability of the terminal is represented by the target capability; wherein
the first capability comprises at least one of the following: the capability to support inter-slot frequency hopping and the capability to support frequency hopping between two adjacent repetitions.

10. The method according to claim 1, wherein in a case that the target capability is the capability to support PUCCH repetition, the capability of the terminal to support inter-slot frequency hopping indicates support of inter-slot frequency hopping, and the capability of the terminal to support frequency hopping between two adjacent repetitions indicates support of frequency hopping between two adjacent repetitions.

11. The method according to claim 1, wherein the target capability is provided as a plurality of sets of target capabilities, wherein each set of the target capabilities are capabilities corresponding to one type of a user equipment UE for the terminal.

12. The method according to any one of claims 1 to 11, wherein the target capability is provided as a plurality of sets of target capabilities, the random access resource is provided in plurality, and the random access information is provided in plurality; wherein
each set of the target capabilities are at least indicated by at least one of the following: at least one of the random access resources and at least one piece of the random access information.

13. The method according to any one of claims 1 to 11, wherein the target capability is a capability of the terminal to perform transmission with a common (common) PUCCH resource.

14. A capability indication apparatus, wherein the capability indication apparatus comprises a transmission module; wherein
the transmission module is configured to transmit random access information on a random access resource;
a target capability of the capability indication apparatus is at least indicated by at least one of the following: the random access resource and the random access information; and
the target capability comprises at least one of the following: a capability to support physical uplink control channel PUCCH repetition, a capability to support inter-slot frequency hopping, and a capability to support frequency hopping between two adjacent repetitions.

15. The capability indication apparatus according to claim 14, wherein the random access resource comprises at least one of the following:
a PRACH resource;
an Msg A PUSCH resource;
an Msg A resource; and
an Msg 3 PUSCH resource.

16. The capability indication apparatus according to claim 15, wherein the PRACH resource comprises at least one of the following:
a PRACH time domain resource;
a PRACH frequency domain resource;
a PRACH sequence;
a scrambling sequence of a PRACH sequence;
a PRACH format; and
a first PRACH resource; wherein
the first PRACH resource indicates whether the capability indication apparatus performs PRACH repetition.

17. The capability indication apparatus according to claim 15, wherein the Msg A PUSCH resource comprises at least one of the following:
an Msg A PUSCH time domain resource;
an Msg A PUSCH frequency domain resource;
an Msg A PUSCH DMRS resource;
an Msg A PUSCH group; and
a first Msg A PUSCH resource; wherein
the first Msg A PUSCH resource indicates whether the capability indication apparatus performs Msg A PUSCH repetition.

18. The capability indication apparatus according to claim 15, wherein the Msg A resource comprises at least one of the following:
an Msg A time domain resource;
an Msg A frequency domain resource; and
an Msg A DMRS resource.

19. The capability indication apparatus according to claim 15, wherein the Msg 3 PUSCH resource comprises at least one of the following:
an Msg 3 PUSCH time domain resource;
an Msg 3 PUSCH frequency domain resource;
an Msg 3 PUSCH DMRS resource;
an Msg 3 PUSCH payload size; and
a first Msg 3 PUSCH resource; wherein
the first Msg 3 PUSCH resource indicates whether the capability indication apparatus performs Msg 3 PUSCH repetition.

20. The capability indication apparatus according to claim 14, wherein the random access information comprises at least one of the following:
information carried by an Msg A PUSCH; and
information carried by an Msg 3 PUSCH.

21. The capability indication apparatus according to claim 14, wherein in a case that the target capability comprises the capability to support PUCCH repetition, the target capability comprises at least one of the following:
a capability to support dynamic PUCCH repetition;
a capability to support semi-static PUCCH repetition;
a capability to support intra-slot PUCCH repetition;
a capability to support inter-slot PUCCH repetition;
a capability to support single-TRP PUCCH repetition;
a capability to support multi-TRP PUCCH repetition;
a capability to support PUCCH repetition based on a PUCCH format;
a capability to support PUCCH repetition based on a PUCCH resource;
a capability to support PUCCH repetition based on an available time unit; and
a capability to support PUCCH repetition based on a physical time unit.

22. The capability indication apparatus according to claim 14, wherein in a case that the target capability is the capability to support PUCCH repetition, a first capability of the capability indication apparatus is represented by the target capability; wherein
the first capability comprises at least one of the following: the capability to support inter-slot frequency hopping and the capability to support frequency hopping between two adjacent repetitions.

23. The capability indication apparatus according to claim 14, wherein in a case that the target capability is the capability to support PUCCH repetition, the capability of the capability indication apparatus to support inter-slot frequency hopping indicates support of inter-slot frequency hopping, and the capability of the capability indication apparatus to support frequency hopping between two adjacent repetitions indicates support of frequency hopping between two adjacent repetitions.

24. The capability indication apparatus according to claim 14, wherein the target capability is provided as a plurality of sets of target capabilities, wherein each set of the target capabilities are capabilities corresponding to one type of a UE for the capability indication apparatus.

25. The capability indication apparatus according to any one of claims 14 to 24, wherein the target capability is provided as a plurality of sets of target capabilities, the random access resource is provided in plurality, and the random access information is provided in plurality; wherein
each set of the target capabilities are at least indicated by at least one of the following: at least one of the random access resources and at least one piece of the random access information.

26. The capability indication apparatus according to any one of claims 14 to 24, wherein the target capability is a capability of the capability indication apparatus to perform transmission with a common PUCCH resource.

27. A terminal, comprising a processor and a memory, wherein the memory stores a program or instructions capable of running on the processor, and when the program or instructions are executed by the processor, the steps of the capability indication method according to any one of claims 1 to 13 are implemented.

28. A readable storage medium, wherein the readable storage medium stores a program or instructions, and when the program or instructions are executed by a processor, the steps of the capability indication method according to any one of claims 1 to 13 are implemented.
